# EUROPÄISCHE PATENTSCHRIFT

(11) **EP 2 558 349 B1**
(45) Veröffentlichungstag und Bekanntmachung des Hinweises auf die Patenterteilung: **11.05.2016**
(21) Anmeldenummer: 11713268.8
(22) Anmeldetag: 07.04.2011
(51) Int. Cl.: B62D 21/00, B62D 21/09, B62D 25/02, B21D 5/08

(54) **TRÄGERELEMENT FÜR EIN KRAFTFAHRZEUG**
CARRIER ELEMENT FOR A MOTOR VEHICLE
ÉLÉMENT DE SUPPORT POUR UN VÉHICULE À MOTEUR

(30) Priorität: 16.04.2010 DE 102010016474
(43) Veröffentlichungstag der Anmeldung: 20.02.2013
(73) Patentinhaber: ThyssenKrupp Steel Europe AG, 47166 Duisburg (DE)
(72) Erfinder: ZÖRNACK, Markus, 48362 Michigan (US); DREWES, Stephan, 41236 Mönchengladbach (DE); PATBERG, Lothar, 47445 Moers (DE)
(74) Vertreter: Cohausz & Florack
(86) Internationale Anmeldenummer: PCT/EP2011/055445
(87) Internationale Veröffentlichungsnummer: WO 2011/128249

(56) Entgegenhaltungen:
- WO-A1-2009/112407
- DE-A1- 19 505 364
- DE-A1-102009 043 022
- FR-A1- 2 881 393

## Beschreibung

Die Erfindung betrifft ein Trägerelement für ein Kraftfahrzeug aus Stahl, welches zumindest teilweise eine geschlossene Querschnittsfläche aufweist und mindestens ein Rollprofil hergestellt aus einem Tailored-Strip, welches zwei, drei oder mehr als drei unterschiedliche Materialgüten und/oder Materialdicken aufweist, umfasst, welches sich in Längsrichtung des Trägerelements erstreckt, wobei durch das Rollprofil ein Trägerelement mit mindestens einer zumindest teilweise geschlossene Querschnittsfläche gebildet wird. Darüber hinaus betrifft die Erfindung eine Karosserie eines Kraftfahrzeugs.

Es ist bekannt, Trägerelemente eines Kraftfahrzeugs aus Tailored-Blanks, d. h. aus auf die Belastungssituation spezifisch angepassten Blechen herzustellen. Hierzu werden Bleche aus unterschiedlichen Materialgüten und/oder -dicken miteinander zu Tailored-Blanks verschweißt und anschließend beispielsweise zu Halbschalen für die Herstellung von Trägerelementen umgeformt. Trägerelemente, welche aus Tailored-Strips hergestellte Rollprofile verwenden, sind beispielsweise aus der deutschen Offenlegungsschrift DE 10 2009 017 297 A1 bekannt. Tailored-Strips sind Metallbänder, welche der Länge nach mindestens mit einem weiteren Metallband verbunden, d.h. verschweißt sind, so dass diese ein gemeinsames Metallband bilden. Die verschweißten Metallbänder können aus unterschiedlichen Materialgüten, beispielsweise aus weichen und hochfesten Stählen, bestehen, um für die Herstellung von belastungsgerecht ausgelegten Bauteilen verwendet zu werden. Darüber hinaus besteht auch die Möglichkeit durch Verwendung unterschiedlicher Materialdicken der Belastungssituation des aus dem Tailored-Strip hergestellten Bauteils gerecht zu werden. Im Vergleich zur Verwendung von Tailored-Blanks zur Herstellung von Trägerelementen entfällt bei Tailored-Strips die Vereinzelung und der Zuschnitt von Blechen sowie das aufwändige Verschweißen der einzelnen Zuschnitte. Aus der oben genannten deutschen Offenlegungsschrift ist ein Trägerelement in Form eines Türschwellers eines Kraftfahrzeugs bekannt, bei welcher das Trägerelement aus zwei Schalen besteht, wobei mindestens eine der beiden Schalen aus einem Tailored-Strip hergestellt ist. Die aus dem Tailored-Strip hergestellte Halbschale kann einen Anbindungsbereich im Türschweller zur Verfügung stellen, so dass eine Außenbeplankung in diesem Bereich auf einfache Weise befestigt werden kann. Einerseits bedarf es bei dem schalenartigen Aufbau des Türschwellers mindestens zweier Fügeschritte, nämlich durch Fügen der beiden zu verbindenden Schalenseiten. Andererseits ist der bekannte Türschweller auch hinsichtlich seiner Steifigkeit und seiner Festigkeit verbesserungswürdig.

Aus der deutschen Offenlegungsschrift DE 197 56 459 A1 ist ein rollgeformter Träger eines Kraftfahrzeugs bekannt, welcher aus einem Tailored Strip mit unterschiedlichen Materialgüten/- dicken hergestellt wurde.

Des Weiteren offenbart die FR 2 881 393 A1 einen Armaturenbrett-Querträger, der aus einem Tailored Strip mit unterschiedlichen Dicken hergestellt ist.

Schließlich ist aus der WO 2009/112407 A1 ein Hohlprofil mit zwei Halbschalenblechen und mit einem zwischen den Halbschalenblechen angeordneten Stegblech bekannt.

Hiervon ausgehend liegt der vorliegenden Erfindung die Aufgabe zugrunde, ein Trägerelement für ein Kraftfahrzeug zur Verfügung zu stellen, welches sich auf einfache Weise herstellen lässt und hohe Festigkeiten bei gleichen Herstellkosten sowie geringem Gewicht bereitstellen kann.

Die Aufgabe wird durch ein Trägerelement mit den Merkmalen des Patentanspruches 1 gelöst.

Wie aus dem genannten Stand der Technik wird aus dem Rollprofil alleine bereits eine geschlossene Querschnittsfläche für das Trägerelement bereitgestellt, so dass eine Schalenbauweise des Trägerelements entfallen kann. Es werden keine zwei Schalen benötigt, sondern aus einem Tailored-Strip ein eine zumindest teilweise geschlossene Querschnittsfläche aufweisendes Trägerelement hergestellt. Das Trägerelement bildet demnach ein zumindest teilweise geschlossenes Hohlprofil und besteht im einfachsten Fall lediglich aus dem Rollprofil. Das aus einem Tailored-Strip hergestellte Trägerelement gewährleistet, dass die Materialdicken und Materialgüten entsprechend der Belastungssituation die notwendige Steifigkeit und Festigkeit des Trägerelements bereitstellen. Das Trägerelement kann beispielsweise über eine einzige Schweißnaht, beispielsweise bei einem Trägerelement hergestellt aus einem Rollprofil mit einer quadratischen Querschnittsfläche, verfügen. Die Herstellkosten können bei gleichen Festigkeitseigenschaften gegenüber der Schalenbauweise noch einmal gesenkt werden.

Erfindungsgemäß bildet das Rollprofil mindestens einen sich in Längsrichtung im Inneren des Trägerelements zumindest teilweise erstreckenden Mittelsteg, so dass insgesamt die Festigkeit und Steifigkeit des Trägerelements deutlich erhöht werden kann. Das Trägerelement mit Mittelsteg kann beispielsweise eine Art Doppelkammerprofil bilden, welches eine deutlich höhere Festigkeit aufweist. Der Mittelsteg wird dabei erfindungsgemäß durch ein Material mit geringerer Materialdicke bereitgestellt, um den Gewichtszuwachs aufgrund des Mittelstegs zu reduzieren.

Gemäß einer ersten Ausgestaltung des erfindungsgemäßen Trägerelements ist mindestens ein Flansch vorgesehen, welcher sich zumindest teilweise in Längsrichtung des Trägerelements erstreckt und optional durch das Rollprofil gebildet wird. Der mindestens eine Flansch des Trägerelements dient vorzugsweise dazu, weitere Elemente mit dem Trägerelement zu verbinden. So kann der Flansch beispielsweise für Dichtungen als Dichtungsflansch verwendet werden oder zur Anbindung einer Außenbeplankung dienen. Wird der Flansch durch das Rollprofil gebildet, wird eine zusätzliche Montage eines Flansches vermieden und die Anzahl der Arbeitsschritte zur Herstellung des Trägerelements mit Flansch verringert. Zusätzlich kann über das Rollprofil auch die Materialgüte bzw. die Materialdicke des Flansches belastungsspezifisch eingestellt werden.

Erfindungsgemäß wird durch die Verwendung eines Tailored-Strips zur Herstellung des Rollprofils die Materialgüte des Mittelstegs frei gewählt und damit sehr gut an die Belastungssituation des Trägerelements angepasst.

Vorzugsweise ist das Trägerelement ein Längsträger oder ein Türschweller eines Kraftfahrzeugs. Längsträger sowie Türschweller müssen im Falle eines Unfalls häufig hohen Knick- und/oder Biegebeanspruchungen standhalten und ein spezifisches Deformationsverhalten aufweisen. Mit dem erfindungsgemäßen Trägerelement kann durch die entsprechende Auswahl des Tailored-Strips einerseits die Belastungssituation sehr genau bei minimalem Gewicht des Trägerelements berücksichtigt werden, wobei die Arbeitsschritte zur Herstellung des Trägerelements gleichzeitig minimiert werden. Auch der Dichtungsflansch eins Türschwellers kann ohne großen Aufwand durch das erfindungsgemäß zu verwendende Rollprofil zur Verfügung gestellt werden.

Weist das Rollprofil zumindest in einem Bereich, vorzugsweise im Bereich eines Mittelstegs Lochstanzungen und/oder Durchzüge auf, kann das Gewicht des Trägerelements weiter reduziert werden, ohne die Festigkeit des Trägerelements wesentlich zu beeinflussen.

Erfindungsgemäß ist das Rollprofil des Trägerelements aus einem Tailored-Strip hergestellt, welches zwei, drei oder mehr als drei unterschiedliche Materialgüten und/oder Materialdicken aufweist. Wie bereits zuvor ausgeführt, werden über die Materialgüten und Materialdicken des Tailored-Strips die verschiedenen Belastungen und möglichen Konfigurationen des Trägerelements berücksichtigt, ohne großen Herstellungsaufwand zu erfordern. Insbesondere bei drei oder mehr unterschiedlichen Materialgüten und Materialdicken können sehr komplexe Belastungssituationen exakt abgebildet werden.

Abhängig von der Belastungssituation im Kraftfahrzeug verläuft gemäß einer weiteren Ausgestaltung des erfindungsgemäßen Trägerelements der Mittelsteg vertikal, horizontal oder diagonal zur Querschnittsfläche des Trägerelements in eingebautem Zustand. Alle drei Konfigurationen weisen Vorteile abhängig von der spezifischen Einbausituation des ist beispielsweise durch einen horizontalen Verlauf des Mittelstegs des Trägerelements gewährleistet, dass im Falle einer seitlichen Knick- und/oder Biegebeanspruchung, beispielsweise im Falle eines Seitenaufpralls, eine maximale Steifigkeit bereitgestellt wird. Dagegen ermöglicht ein vertikaler Mittelsteg eine möglichst hohe Belastung des Trägerelements in vertikaler Richtung. Der diagonal verlaufende Mittelsteg dagegen stellt einen sehr guten Kompromiss aus beiden Belastungssituationen dar und stellt insofern ein besonders homogen belastbares Trägerelement bereit.

Erfindungsgemäß weist der Bereich des Mittelstegs des Rollprofils eine geringere Wanddicke als die übrigen Bereiche des Rollprofils auf und/oder besteht aus einer weicheren Stahlgüte als die übrigen Bereiche des Rollprofils. In der Regel wird für den Mittelsteg keine extrem hohe Steifigkeit gefordert, so dass hier die Materialdicken reduziert und Gewicht eingespart werden kann. Weichere Stahlgüten ermöglichen darüber hinaus, ein gezieltes Deformationsverhalten des Trägerelements zu erreichen.

Gemäß einer nächsten Ausgestaltung des erfindungsgemäßen Trägerelements ist zusätzlich ein weiteres Profil vorgesehen, welches mit dem Rollprofil stoffschlüssig verbunden ist und eine Außenwand des Trägerelements bildet. Durch die Verwendung eines weiteren Profils zur Bildung einer Außenwand des Trägerelements können geometrische Anforderungen des Trägerelements, welche beispielsweise den Steifigkeitsanforderungen widersprechen, mit minimalem Aufwand gewährleistet werden, wobei das Rollprofil, hergestellt aus einem Tailored-Strip die Aufgabe übernimmt, die mechanischen Belastungsanforderungen bereitzustellen. Beispielsweise kann das Rollprofil eine für den Einbau des Trägerelements ungünstige Form annehmen, um beispielsweise die Belastungsanforderungen zu erfüllen und über das zusätzliche Profil die geometrischen Anforderungen an den Einbau des Trägerelements erfüllt werden. Der Aufwand zur Bereitstellung eines entsprechenden Trägerelements entspricht etwa dem eines in schalenbauweise hergestellten Trägerelements. Dieser Ansatz kommt insbesondere dann zum Tragen, wenn die Plattform beispielsweise eines Fahrzeugtyps gleich ist und in Abhängigkeit des Fahrzeugtyps (Caravan, Coupe, Cabrio, etc.) die Form des Profils (Außenwand) variiert.

Die Dichtungsflansche eines Türschwellers können gemäß einer weiteren Ausgestaltung des erfindungsgemäßen Trägerelements schließlich dadurch bereitgestellt werden, dass als Flansch ein oder zwei Dichtungsflansche vorgesehen sind und der oder die Dichtungsflansche optional über einen Formschluss mit dem Trägerelement verbunden sind. In diesem Falle sind für die Flansche zusätzliche Bauteile notwendig. Allerdings ermöglicht dieser Freiheitsgrad die Dichtungsflansche unabhängig von der Wahl der geometrischen Form des Rollprofils anzuordnen. Werden die Dichtungsflansche, wie bereits ausgeführt, durch das Rollprofil bereitgestellt, entfällt der Aufwand des Anbringens der Dichtungsflansche jedoch.

Gemäß einer weiteren Lehre der vorliegenden Erfindung wird die aufgezeigte Aufgabe durch eine Karosserie eines Kraftfahrzeugs, welche ein erfindungsgemäßes Trägerelement aufweist, gelöst. Wie bereits ausgeführt, können dadurch kostengünstige und an die Belastungssituation angepasste Trägerelemente bereitgestellt werden, welche zu einer entsprechenden Kostenreduzierung der Kraftfahrzeugkarosserie führen.

Die Erfindung wird im Weiteren anhand von Ausführungsbeispielen in Verbindung mit der Zeichnung näher erläutert. Die Zeichnung zeigt in Querschnittsansichten in
- Fig. 1a), b): ein erstes Ausführungsbeispiel eines erfindungsgemäßen Trägerelements ohne Mittelsteg aus dem Stand der Technik,
- Fig. 2a), b): zwei weitere Ausführungsbeispiele eines erfindungsgemäßen Trägerelements mit vertikalem oder horizontalem Mittelsteg,
- Fig. 3a), b): zwei weitere Ausführungsbeispiele mit einem diagonal verlaufenden Mittelsteg und
- Fig. 4a) bis c): drei weitere Ausführungsbeispiele eines erfindungsgemäßen Trägerelements mit einem zusätzlichen Profil.

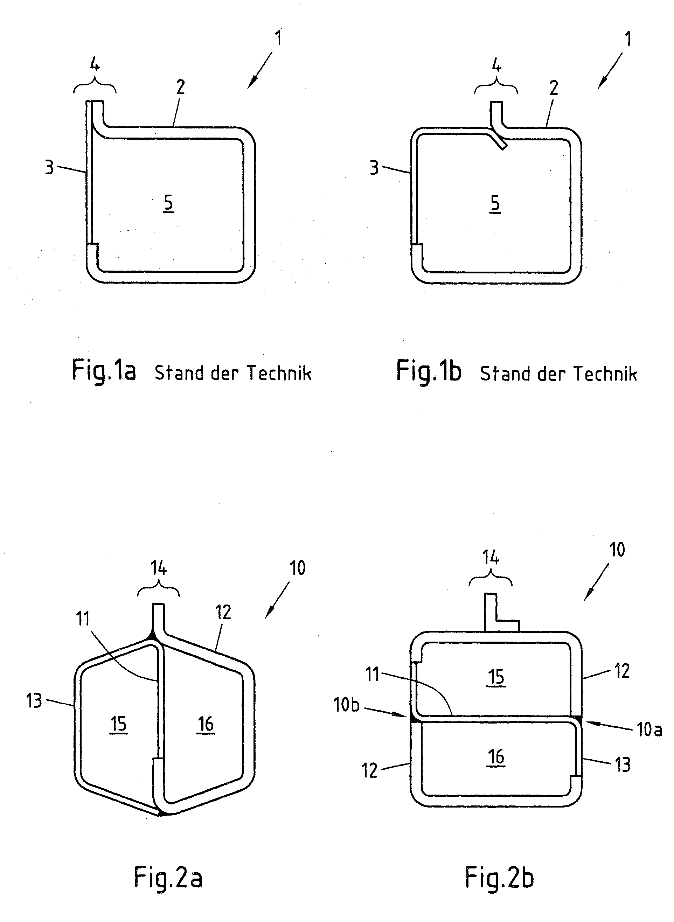

Die in den Figuren 2 bis 4 dargestellten Ausführungsbeispiele erfindungsgemäßer Trägerelemente können sämtlich als Längsträger oder Türschweller in einem Kraftfahrzeug eingesetzt werden.

In Fig. 1a) und b) werden in einer Querschnittsansicht zwei Ausführungsbeispiele eines Trägerelements aus dem Stand der Technik dargestellt, wobei das Trägerelement ein Rollprofil 1 aufweist. Das Rollprofil 1 besteht dabei aus zwei verschiedenen Bereichen 2 und 3, welche, wie vorliegend dargestellt, unterschiedliche Materialdicken aufweisen. Das Rollprofil 1 ist zu einer quadratischen, geschlossenen Querschnittsfläche 5 geformt und weist einen Flansch 4 auf, in welchem die beiden Bereiche des Rollprofils 2 und 3 miteinander stoffschlüssig verbunden sind, um die geschlossene Querschnittsfläche 5 zu bilden. Wie man an Fig. 1a) erkennen kann, ist das Rollprofil aus einem Tailored-Strip hergestellt, welches zwei verschiedene Bereiche 2, 3 aufweist, die unterschiedliche Materialdicken aufweisen. Die unterschiedlichen Materialdicken gewährleisten, dass das Trägerelement optimal auf die Belastungen in eingebautem Zustand angepasst werden kann. Selbstverständlich ist denkbar, an Stelle unterschiedlicher Materialdicken auch zusätzlich unterschiedliche Materialgüten mit gleicher oder unterschiedlicher Materialdicken zu wählen.

Fig. 1b) zeigt eine zweite Variante des Trägerelements bestehend aus einem Rollprofil, welches zu einer quadratischen Querschnittsform rollprofiliert wurde. Zu erkennen sind die beiden Bereiche 2, 3, welche unterschiedliche Dicken aufweisen. Der Flansch 4 ist hier in der Mitte der Querschnittsfläche 5 des Trägerelements angeordnet, die durch das Rollprofil 1 bereitgestellt wird. Die Herstellung des Rollprofils 1 der Ausführungsbeispiele aus Fig. 1 a) und b) erfolgt durch Rollprofilieren eines Tailored-Strips bestehend aus zwei Metallbändern mit zwei unterschiedlichen Materialdicken der Bereiche 2 und 3. Selbstverständlich ist denkbar, dass drei oder mehr unterschiedliche Materialdicken und/oder Materialgüten durch das Tailored-Strip bereitgestellt werden können.

In Fig. 1a) und b) nicht dargestellt sind beispielsweise Lochstanzungen oder Durchzüge. Sie können beispielsweise in der nach unten weisenden Fläche des Trägerelements eingebracht werden und einen Lackablauf bilden, so dass diese insofern bei der Lackierung des Trägerelements vorteilhaft sind.

Fig. 2a) und b) zeigen zwei Ausführungsbeispiele eines erfindungsgemäßen Trägerelements bestehend aus einem Rollprofil 10, welches einen Mittelsteg 11 bereitstellt. Das Rollprofil 10 besteht aus zwei Bereichen 12, 13, welche aus Materialien mit unterschiedlicher Materialdicke bestehen. Wie in Fig. 2a) dargestellt, ist der Mittelsteg 11 vertikal ausgerichtet und besteht aus einem dünneren Material, so dass die Gewichtszunahme aufgrund des Mittelstegs 11 gering ausfällt. Darüber hinaus kann der Mittelsteg 11 vor dem Rollprofilieren mit Lochstanzungen oder Durchzügen ausgestattet werden, so dass eine weitere Gewichtseinsparung erzielt wird. Der Mittelsteg 11 gewährleistet eine sehr hohe Steifigkeit des Trägerelements in vertikaler Richtung. Der Flansch 14, welcher auch als Dichtungsflansch verwendet werden kann, wird bereits durch das Rollprofil 10 bereitgestellt, so dass zusätzliche Arbeitsschritte zur Bereitstellung des Dichtungsflansches nicht benötigt werden. Beim Einsatz des in Fig. 2a) dargestellten Trägerelements als Türschweller in einem Kraftfahrzeug kann beispielsweise der Bereich 12 eine höhere Materialdicke nach außen oder nach innen aufweisen, je nachdem welche Deformationserfordernisse in einem Seitenaufprall gewünscht werden.

Eine höhere seitliche Festigkeit ergibt sich in dem in Fig. 2b) dargestellten Ausführungsbeispiel. Auch hier besteht das erfindungsgemäße Trägerelement aus einem Rollprofil 10, welches derart rollprofiliert ist, dass es einen Mittelsteg 11 bildet und zwei geschlossene Querschnittsflächen 15 und 16 aufweist. Im Unterschied zu dem Ausführungsbeispiel in Fig. 2a) ist das Rollprofil 10 aus einem Tailored-Strip hergestellt, welches einen mittleren Bereich 13 mit geringerer Materialdicke und zwei äußerer Bereiche 12 mit höherer Materialdicke aufweist. Das Tailored-Strip ist zu einem Rollprofil derart umgeformt, dass es die Form eines Doppelhohlkammerprofils aufweist. Die beiden Kanten 10a und 10b des Rollprofils 10 sind mit dem mittleren Bereich 13 des Hohlprofils verschweißt, so dass eine geschlossene Hohlkammerstruktur bereitgestellt wird. Diese weist eine enorme Steifigkeit auf. Der Mittelsteg 11 verläuft hier horizontal und kann insofern Seitenaufprallkräfte sehr gut aufnehmen. Der Dichtungsflansch 14 ist über einen Stoff- und/oder Formschluss als zusätzliches Bauteil vorgesehen. Allerdings kann der Dichtungsflansch auch über das Rollprofil 10 bereitgestellt werden.

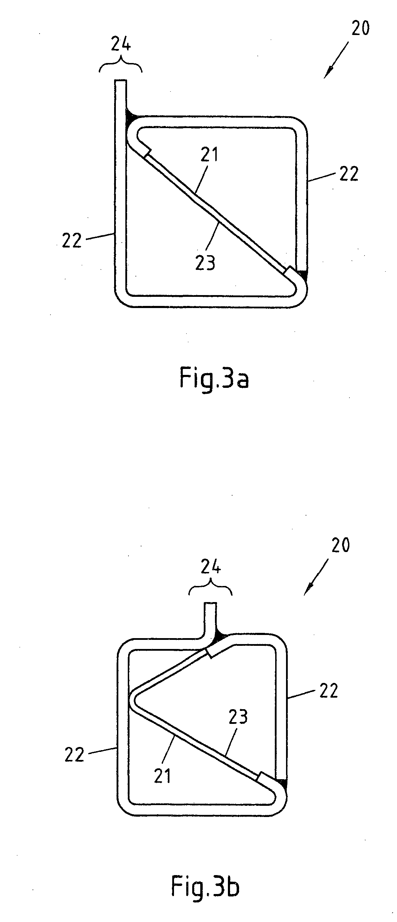

Fig. 3a) und b) zeigt nun zwei weitere Ausführungsbeispiele eines erfindungsgemäßen Trägerelements eines Kraftfahrzeugs mit einem diagonal verlaufenden Mittelsteg 21, welcher aus dem Bereich 23 des Rollprofils 20 bereitgestellt wird. Bei beiden Ausführungsbeispielen ist der Flansch 24 durch das Rollprofil bereitgestellt. Fig. 3a) ist der Flansch 24 am Rand und in Fig. 3b) ist der Flansch in der Mitte des Trägerelements angeordnet. Beide Ausführungsbeispiele weisen ein Rollprofil 20 auf, welches aus einem Tailored-Strip mit drei Materialbereichen hergestellt ist. Das Rollprofil 20 weist zwei Bereiche 22 mit einer größeren Materialdicke und einen Bereich 23 mit geringerer Materialdicke auf, welcher für den Mittelsteg 21 vorgesehen ist.

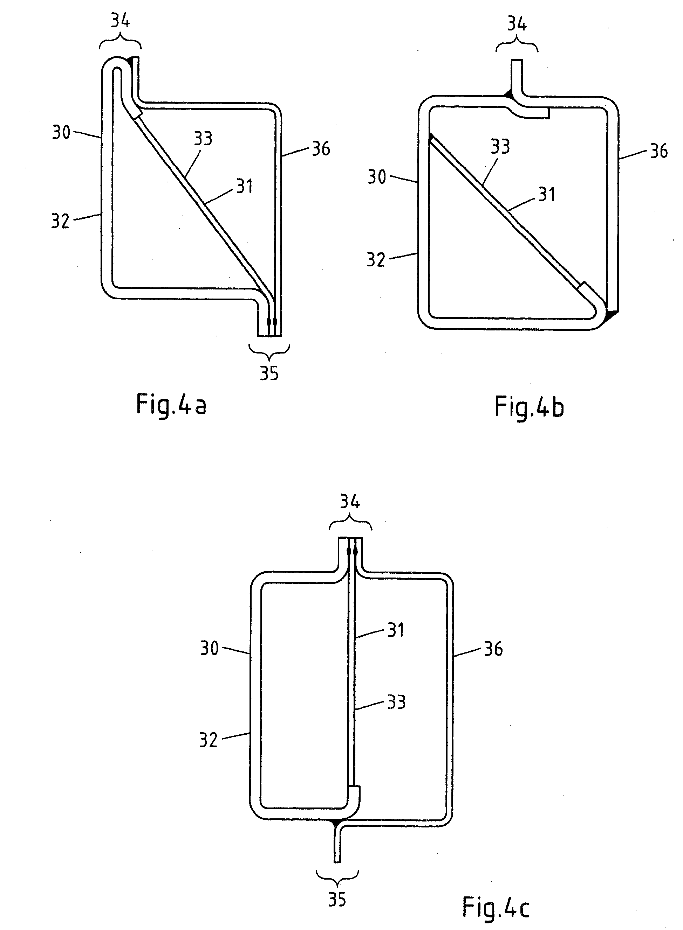

Noch komplexer strukturierte Ausführungsbeispiele eines erfindungsgemäßen Trägerelements zeigt Fig. 4a) bis c) ebenfalls in einer Querschnittsansicht. Die Ausführungsbeispiele aus Fig. 4a) bis 4c) weisen ein Rollprofil 30 auf, welches aus einem Tailored-Strip hergestellt ist, so dass ein Bereich 33 mit geringerer Materialdicke und ein Bereich 32 mit höherer Materialdicke bereitgestellt wird. Zusätzlich ist ein weiteres Profil 36 vorgesehen, welches gemeinsam mit dem Rollprofil 30 dem Trägerelement etwa eine viereckige Querschnittsform verleiht, so dass geometrischen Anforderungen beim Einbau des Trägerelements im Kraftfahrzeug genügt wird. In den Fig. 4a) und 4c) bildet das zusätzliche Profil 36 gemeinsam mit dem Rollprofil 30 zwei Dichtungsflansche am Rand oder mittig aus. Gleichzeitig wird ein Mittelsteg 31 durch das Rollprofil, 30 zur Verfügung gestellt, um die Steifigkeit des Trägerelements zu erhöhen.

In Fig. 4b) wird lediglich ein Dichtungsflansch 34 bereitgestellt, welcher vorliegend durch das zusätzliche Profil 36 gebildet wird. Allen dargestellten Ausführungsbeispielen ist gemein, dass diese aus einem Tailored-Strip hergestellten Rollprofil bestehen, das belastungsgerecht angepasst ist und bei möglichst einfachem Herstellweg maximale Anforderungen an die Belastung und Geometrie erfüllt.

## Patentansprüche

1. Trägerelement für ein Kraftfahrzeug aus Stahl, welches zumindest teilweise eine geschlossene Querschnittsfläche aufweist und mindestens ein Rollprofil (10, 20, 30) hergestellt aus einem Tailored-Strip, welches zwei, drei oder mehr als drei unterschiedliche Materialgüten und/oder Materialdicken aufweist, umfasst, welches sich in Längsrichtung des Trägerelements erstreckt, wobei durch das Rollprofil (10, 20, 30) ein Trägerelement mit mindestens einer zumindest teilsweise geschlossene Querschnittsfläche gebildet wird,
**dadurch gekennzeichnet, dass** das Rollprofil (10, 20, 30) mindesten einen sich in Längsrichtung im Inneren des Trägerelements zumindest teilweise erstreckenden Mittelsteg (11, 21, 31) bildet und der Bereich des Mittelstegs des Rollprofils aus einer weicheren Stahlgüte besteht als die übrigen Bereiche des Rollprofils und eine geringere Wanddicke als die übrigen Bereiche des Rollprofils aufweist.

2. Trägerelement nach Anspruch 1,
**dadurch gekennzeichnet, dass** mindestens ein Flansch vorgesehen ist, welcher sich zumindest teilweise in Längsrichtung des Trägerelements erstreckt und optional durch einen Teil des Rollprofils gebildet wird.

3. Trägerelement nach einem der Ansprüche 1 oder 2,
**dadurch gekennzeichnet, dass** das Trägerelement ein Längsträger oder ein Türschweller eines Kraftfahrzeugs ist.

4. Trägerelement nach einem der Ansprüche 1 bis 3,
**dadurch gekennzeichnet, dass** das Rollprofil zumindest in einem Bereich, vorzugsweise im Bereich eines Mittelstegs Lochstanzungen und/oder Durchzüge aufweist.

5. Trägerelement nach einem der Ansprüche 1 bis 4,
**dadurch gekennzeichnet, dass** der Mittelsteg vertikal, horizontal oder diagonal zur gesamten Querschnittsfläche des Trägerelements in eingebautem Zustand des Trägerelements verläuft.

6. Trägerelement nach einem der Ansprüche 1 bis 5,
**dadurch gekennzeichnet, dass** zusätzlich ein weiteres Profil vorgesehen ist, welches mit dem Rollprofil stoffschlüssig verbunden ist und eine Wand des Trägerelements bildet.

7. Trägerelement nach Anspruch 2,
**dadurch gekennzeichnet, dass** als Flansch ein oder zwei Dichtungsflansche vorgesehen sind und der oder die Dichtungsflansche optional über einen Form- und/oder Stoffschluss mit dem Trägerelement verbunden sind.

8. Karosserie eines Kraftfahrzeuges umfassend mindestens ein Trägerelement gemäß einem der Ansprüche 1 bis 7.

## Claims

1. Carrier element for a motor vehicle made of steel having at least partially a closed cross-section area and at least one rolled profile (10, 20, 30) produced from a tailored strip, which comprises two, three or more than three different material qualities and/or material thicknesses, which extends in longitudinal direction of the carrier element, wherein through the rolled profile (10, 20, 30) a carrier element having at least one at least partially closed cross-sectional area is formed, **characterized in that** the rolled profile (10, 20, 30) forms a middle web (11, 21, 31) at least partially extending in longitudinal direction in the interior of the carrier element and the region of the middle web of the rolled profile consists of a softer steel quality than the remaining regions of the rolled profile and has a smaller wall thickness than the remaining regions of the rolled profile.

2. Carrier element according to Claim 1, **characterized in that** at least one flange is provided, which extends at least partially in longitudinal direction of the carrier element and is optionally formed by a part of the rolled profile.

3. Carrier element according to any one of Claims 1 or 2, **characterized in that** the carrier element is a side member or a door sill of a motor vehicle.

4. Carrier element according to any one of Claims 1 to 3, **characterized in that** the rolled profile comprises punched holes and/or passages at least in a region, preferentially in the region of a middle web.

5. Carrier element according to any one of Claims 1 to 4, **characterized in that** the middle web runs vertically, horizontally or diagonally to the entire cross-sectional area of the carrier element in the installed state of the carrier element.

6. Carrier element according to any one of Claims 1 to 5, **characterized in that** a further profile is additionally provided, which is connected to the rolled profile through material joining and forms a wall of the carrier element.

7. Carrier element according to Claim 2, **characterized in that** as flange one or two sealing flanges are provided and the sealing flange or sealing flanges is/are optionally connected to the carrier element via a positive fit and/or material joint.

8. Body of a motor vehicle comprising at least one carrier element according to any one of Claims 1 to 7.

## Revendications

1. Elément porteur pour un véhicule automobile en acier, lequel présente au moins en partie une surface de section transversale fermée et au moins un profilé roulé (10, 20, 30) fabriqué en un feuillard soudé (tailored strip), lequel présente deux, trois ou plus de trois différentes qualités de matière et/ou épaisseurs de matière, lequel s'étend dans la direction longitudinale de l'élément porteur, par le profilé roulé (10, 20, 30) étant formé un élément porteur avec au moins une surface de section transversale fermée au moins en partie,
**caractérisé en ce que**
le profilé roulé (10, 20, 30) forme au moins un listel central (11, 21, 31) s'étendant au moins en partie dans la direction longitudinale à l'intérieur de l'élément porteur et **en ce que** la région du listel central du profilé roulé est constituée d'une qualité d'acier plus douce que les autres régions du profilé roulé et présente une épaisseur de paroi plus faible que les autres régions du profilé roulé.

2. Elément porteur selon la revendication 1,
**caractérisé en ce**
**qu'**il est prévu au moins une bride, laquelle s'étend au moins en partie dans la direction longitudinale de l'élément porteur et en option est formée par une partie du profilé roulé.

3. Elément porteur selon l'une quelconque des revendications 1 ou 2,
**caractérisé en ce que**
l'élément porteur est un longeron ou un bas de marche d'un véhicule automobile.

4. Elément porteur selon l'une quelconque des revendications 1 à 3,
**caractérisé en ce que**
dans au moins une région, de préférence dans la région d'un listel central, le profilé roulé présente des perforations et/ou des passages.

5. Elément porteur selon l'une quelconque des revendications 1 à 4,
**caractérisé en ce que**
le listel central s'étend à la verticale, à l'horizontale ou à la diagonale de l'ensemble de la surface de section transversale de l'élément porteur, dans la position montée de l'élément porteur.

6. Elément porteur selon l'une quelconque des revendications 1 à 5,
**caractérisé en ce**
**qu'**il est prévu en supplément un profilé supplémentaire, lequel est relié par matière avec le profilé roulé et forme une paroi de l'élément porteur.

7. Elément porteur selon la revendication 2,
**caractérisé en ce**
**qu'**en tant que bride, il est prévu une ou deux bride(s) d'étanchéité et en ce qu'en option, la ou les bride(s) d'étanchéité sont reliées par complémentarité de forme et/ou par matière avec l'élément porteur.

8. Carrosserie d'un véhicule automobile, comprenant au moins un élément porteur selon l'une quelconque des revendications 1 à 7.
